Europäisches Patentamt

European Patent Office

Office européen des brevets

(11) Publication number: **0 132 214**
**B1**

(12) **EUROPEAN PATENT SPECIFICATION**

(45) Date of publication of patent specification: **28.09.88**

(51) Int. Cl.⁴: **B 64 D 29/06**

(21) Application number: **84630079.6**

(22) Date of filing: **15.05.84**

(54) **Load sharing for engine nacelle.**

(30) Priority: **14.07.83 US 514201**

(43) Date of publication of application:
**23.01.85 Bulletin 85/04**

(45) Publication of the grant of the patent:
**28.09.88 Bulletin 88/39**

(84) Designated Contracting States:
**DE FR GB**

(56) References cited:
**EP-A-0 028 970**
**FR-A-2 295 876**
**GB-A-2 010 969**
**GB-A-2 119 857**
**US-A-3 952 973**

(73) Proprietor: **UNITED TECHNOLOGIES CORPORATION**
**United Technologies Building 1, Financial Plaza**
**Hartford, CT 06101 (US)**

(72) Inventor: **Bower Charles Robert**
**118 Bailey Road**
**Middletown Connecticut 06457 (US)**
Inventor: **Fowler, Frank L.**
**54 Little Harbor Road**
**Guilford Connecticut 06437 (US)**

(74) Representative: **Weydert, Robert et al**
**OFFICE DENNEMEYER S.à.r.l. P.O. Box 1502**
**L-1015 Luxembourg (LU)**

Courier Press, Leamington Spa, England.

## Description

This invention relates to a fan gas turbine engine comprising an engine case including a fan case and a turbine case, a fan cowling attached to the fan case and a core cowling surrounding the turbine case, the engine being adapted to be mounted to an aircraft or a ground test stand by mounting means including a thrust link, spaced from the engine centerline and connected to the fan case, said link applying a moment to the fan case around the point of attachment thereto during operation of the engine.

A problem that has been persistent in fan gas turbine engines is that during high power operations, particularly during excursions, the typical engine mounts adapted to carry the thrust loads produce a moment around the point of attachment to the engine fan case, which impart an uneven load thereto. Since the shaft and bearings do not necessarily see this deflection, this load has been known to cause severe rubbing of the fan blades in a fan/jet engine, and can be intolerable particularly during engine ground test in an engine test rig.

An object of this invention is to provide for a fan-jet engine and its nacelle means to relieve the loads on the engine fan case to avoid blade rubbing.

To achieve this the fan gas turbine engine of the invention is characterized in that the fan cowling and core cowling are attached to each other, and that a pair of load sharing adaptors, each comprising a link having one end operatively attached to the turbine case and the other end operatively attached to the core cowling are mounted on opposing sides of the turbine case remote from and spaced rearwardly from the thrust link relative to the flow direction of the working fluid medium in the turbine engine, and releasable means are attached to the core cowling for connection to the load sharing adaptors for transmitting the load imparted by the thrust link to the fan case through the fan cowling the core cowling and the load sharing adaptors in the turbine case.

By uniting the fan cowling and core cowling if they are not already in that condition and tying the nacelle cowling attached to the fan case to the turbine case rear mounting rail in such a manner as to produce a couple around the point where the thrust load is producing the moment the loads on the engine fan case are relieved and blade rubbing is avoided. The tie down mechanism is mounted so that it is in tension and reacts to the load and hence shares the load to effectively cancel it out and relieve the stresses on the engine fan case. It is contemplated by virtue of this invention that the engine can be ground tested with its flight nozzle in place which was not the case heretofore. The load sharing mechanism of this invention can be easily adapted to accommodate changes due to wear and varying tolerances.

The load sharing mechanism does not interfere with the opening and closing of the conventional clam-shell doors of the nacelle and requires no wrenches or the like for the attachment. The mechanism is relatively simple and inexpensive while allowing ground testing when the engine's exhaust nozzle is assembled thereto.

The accompanying drawings illustrate an embodiment of the invention.

In the drawings:

Fig. 1 is a view in perspective showing an engine and nacelle affixed to the aircraft's pylon.

Fig. 2 is a side elevation view showing the engine and a portion of the nacelle affixed to a ground test stand.

Fig. 3 is a schematic representation of a cross section view of the clam shell shown in closed and opened positions.

Fig. 4 is a sectional view taken along lines 4—4 of Fig. 3.

While in its preferred embodiment this invention is described as applied to an engine and nacelle adapted to be tested in a ground test stand, however, as would be obvious to one skilled in this art, this invention can be utilized for flight hardware. It should be recognized that because the nacelle and engine is affixed to a test stand grounded to a fixed structure, the nacelle and engine when affixed to aircraft is grounded to the movable aircraft. This occasions different load characteristics and the actual hardware in the aircraft design situation could be smaller and lighter than that employed with the test stand application.

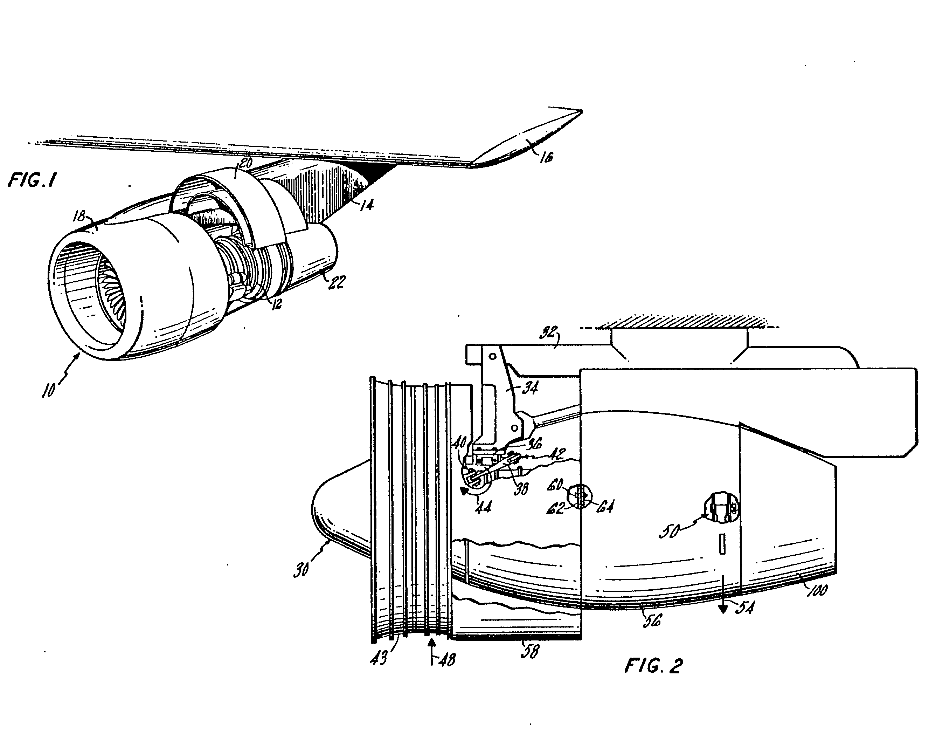

As shown in Fig. 1, in the preferred embodiment the nacelle generally indicated by reference numeral 10 housing the fan-jet engine 12 is affixed to the pylon 14 carried underneath the wing 16 of the aircraft (not shown) and is the clam-shell design. For the sake of convenience and simplicity the details of the nacelle and engine are omitted herefrom as they do not constitute a part of the invention but for further details a suitable engine/nacelle installation reference should be made to the JT9D engine manufactured by Pratt & Whitney Aircraft Group of United Technologies Corporation, the assignee of this patent application, powering the 767 aircraft manufactured by the Boeing Commercial Airplane Company.

Suffice it to say the nacelle consists of various sections, the bellmouth inlet section 18, the clam-shell doors 20 and the nozzle section 22.

In Fig. 1 the engine/nacelle installation is shown as it would appear on an aircraft and in Fig. 2 the engine/nacelle is shown as it would appear on a ground test stand. As noted in Fig. 2 the engine generally indicated by reference numeral 30 is mounted to a beam support structure 32 through the cross beam 34 bolted to the engine interface plate 36. Beam 32 may be secured to the ceiling of a building or other suitable supporting structure. The thrust loads are taken through the link 38 connected to the fan case 43 through the attachment assembly 40 and the support through the attachment assembly 42.

As is apparent in Fig. 2 the bellmouthed inlet section is removed from the nacelle assembly and the fan case 43 of the engine is in view. As stated earlier in this patent application the problem is created because the thrust loads taken up by link 38 is resolved at the attachment point indicated by the arrow 44 which occurs at a point spaced from the engine center line. This creates a moment which tends to cock or rotate the engine fan case normal to the engine centerline as indicated by the arrow 48. Consequently the engine fan case becomes distorted and moves relative to the rotating blades to cause blade tip rubbing. .

This invention obviates that problem by incorporating a load sharing adapter generally indicated by reference numeral 50 at a point at the rear of the engine (turbine exhaust case) so as to create a reaction force to absorb the load created by the moment as indicated by the vector arrow 54. Obviously similar attachment is located diametrically opposed but the details thereof are omitted herefrom for the sake of simplicity and convenience.

The nacelle core cowling 56 and the nacelle fan cowling 58 are suitably secured to each other by a series of bolts 60 (only one being shown) through complementary flanges 62 and 64 attached to the core and fan cowlings 56 and 58. Of course, this may not be necessary if both cowlings are formed in a unitary assembly. Thus the load through the thrust link 38 is transmitted to the fan case through the cowling structure to the load sharing adapter 50.

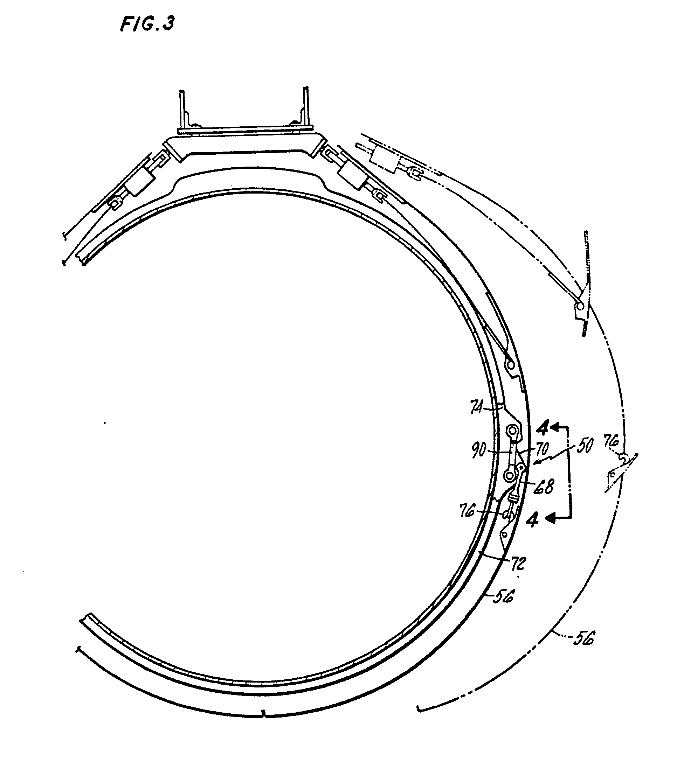

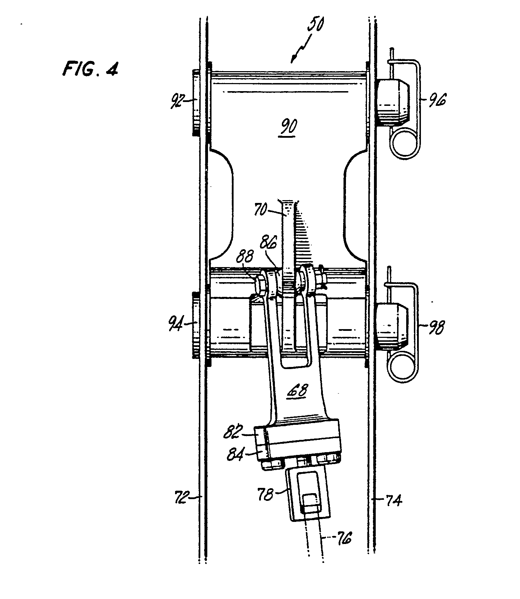

The remaining portion of this description will describe the load sharing adapter which can best be seen in Figs. 3 & 4. As can be seen in Fig. 3 the load sharing adapter 50 comprises a strap-like element or link 68 that has one end attached to the gusset 70 that is affixed to the engine attachment rails 72 and 74, and the other end attached to the nacelle core cowling 56 through hook 76. Hook 76 and its cooperating eye attachment 78 are commercially available and as noted fit flush with the skin of the nacelle in the closed position.

Cowling 56 is shown in both the closed position and in the open position (in phantom) to demonstrate the load carrying structure.

The strap-like element or link 68 carries an interface end 82 that mates with the flange 84 of the eye attachment 78. The opposite end is bifurcated to receive a universal ball joint 86 secured to the bifurcated end through the pivot bolted connection 88 which in turn mates in a bore formed in gusset 70. Gusset 70 is integrally formed in the block 90 that fits between adjacent rails 72 and 74 are ground handling holes already present in engine and secured thereto by pins 92 and 94. The pins are kept from falling out by spring clips 96 and 98 which are shown for ease of assembly and disassembly but a more permanent attachment is contemplated for flight hardware.

As is apparent from the foregoing the link 68 serves to impart a reaction force to share the load imparted by the thrust link 38 when the engine is operated. Since the loads are transmitted to the engine cases upstream of nozzle/nacelle interface 56/100 it is now possible to test the engine with the flight nozzle 100 (Fig. 2).

While the load sharing concept of this invention doesn't necessarily remove all of the engine fan case distortions it provides sufficient relief to allow ground testing with a minimal of blade rubbing and allows the engines to be given a higher efficiency rating.

In addition to the advantages enumerated above and without being a limitation thereto the invention affords these other advantages:

1. Ground test may be done with the flight nozzle intact.

2. The load sharing feature is adjustable for tolerances and wear. This is occasioned by having one end of hook 76 threadably connected to eye assembly 78 so that it can be adjusted to take up the slack occasioned by wear and tolerances in the system.

3. The invention is quick and relatively easy to operate requiring no wrenches or special tools, and

4. As been determined by actual tests, the invention is reliable and repeatable.

**Claims**

1. A fan gas turbine engine comprising an engine case including a fan case (43) and a turbine case, a fan cowling (58) attached to the fan case (43) and a core cowling (56) surrounding the turbine case, the engine being adapted to be mounted to an aircraft or a ground test stand by mounting means including a thrust link (38), spaced from the engine centerline and connected to the fan case (43), said link (38) applying a moment to the fan case around the point of attachment thereto during operation of the engine, characterized in that the fan cowling (58) and core cowling (56) are attached to each other, and that a pair of load sharing adaptors (50), each comprising a link (68) having one end operatively attached to the turbine case and the other end operatively attached to the core cowling (56), are mounted on opposing sides of the turbine case remote from and spaced rearwardly from the thrust link (38) relative to the flow direction of the working fluid medium in the turbine engine, and releasable means (76) are attached to the core cowling (56) for connection to the load sharing adaptors (50) for transmitting the load imparted by the thrust link (38) to the fan case (43) through the fan cowling (58), the core cowling (56) and the load sharing adaptors (50) to the turbine case.

2. Fan gas turbine engine according to claim 1, characterized in that each load sharing adaptor (50) comprises a block-like element (90) supported between a pair of turbine case rails (72, 74), a gusset (70) extending radially from said block-like element (90), a universal ball-like member (86) supported in a bore formed in said gusset (70) and said link (68) interconnecting said universal ball-like member and said releasable means (76).

**Patentansprüche**

1. Fan-Gasturbinentriebwerk mit einem Triebwerksgehäuse, das ein Fangehäuse (43) und ein Turbinengehäuse aufweist, eine Fanverkleidung (58), die an dem Fangehäuse (43) befestigt ist, und eine Kernverkleidung (56), die das Triebwerksgehäuse umgibt, wobei das Triebwerk an einem Flugzeug oder einem Bodenteststand durch eine Befestigungseinrichtung befestigbar ist, die ein Schubglied (38) aufweist, das Abstand von der Triebwerksmittelinie hat und mit dem Fangehäuse (43) verbunden ist, wobei das Glied (38) ein Moment auf das Fangehäuse um den Befestigungspunkt an demselben während des Betriebes des Triebwerks ausübt, dadurch gekennzeichnet, daß die Fanverkleidung (58) und die Kernverkleidung (56) aneinander befestigt sind und daß zwei lastverteilende Adapter (50), von denen jeder ein Glied (68) aufweist, von welchem ein Ende an dem Turbinengehäuse und das andere Ende an der Kernverkleidung (56) befestigt ist, auf entgegengesetzten Seiten des Turbinengehäuses entfernt von und mit Abstand hinter dem Schubglied (38) relativ zu der Srömungsrichtung des Arbeitsfluidmediums in dem Turbinengehäuse befestigt sind und daß lösbare Einrichtungen (76) an der Kernverkleidung (56) befestigt sind zur Verbindung mit den lastverteilenden Adaptern (50) zum Übertragen der durch das Schubglied (38) auf das Fangehäuse (43) ausgeübten Belastung über die Fanverkleidung (58), die Kernverkleidung (56) und die lastverteilenden Adapter (50) auf das Turbinengehäuse.

2. Fan-Gasturbinentriebwerk nach Anspruch 1, dadurch gekennzeichnet, daß jeder lastverteilende Adapter (50) ein blockartiges Element (90) aufweist, das zwischen zwei Turbinengehäuseschienen (72, 74) befestigt ist, eine Anschlußplatte (70), die sich von dem blockartigen Element (90) aus radial erstreckt, ein kugelgelenkartiges Teil (86), das in einer in der Anschlußplatte (70) gebildeten Bohrung abgestützt ist, und das Glied (68), welches das kugelgelenkartige Teil und die lösbaren Einrichtungen (76) miteinander verbindet.

**Revendications**

1. Un moteur à turbine à gaz à double flux comprenant une gaine de moteur contenant une gaine de soufflante (43) et une gaine de turbine, un capot de noyau (58) fixé sur la gaine de soufflante (43) et un capot de noyau (56) entourant la gaine de turbine, le moteur étant apte à être monté sur un avion ou une station d'essai au sol par des moyens de montage comprenant un coupleur de poussée (38), situé à l'écart de l'axe du moteur et connecté à la gaine de soufflante (43), le dit coupleur (38) appliquant un moment à la gaine de soufflante autour du point de fixation de celle-ci durant le fonctionnement du moteur, caractérisé en ce que le capot de soufflante (58) et le capot de noyau (56) sont fixés l'un à l'autre, et qu'une paire d'adaptateurs de répartition des charges (50) comprenant chacun un coupleur (68), présentant une extrémité fixée en service à la gaine de turbine et l'autre extrémité fixée en service au capot de noyau (56), sont montés sur des côtés opposés de la gaine de turbine à distance du coupleur de poussée (38) et écarté de celui-ci vers l'arrière par rapport à la direction d'écoulement du milieu fluide travaillant dans le moteur à turbine, et en ce que des moyens que l'on peut déconnecter (76) sont fixés au capot de noyau (56) pour le connecter aux adaptateurs de répartition de charge (50) pour transmettre la charge communiquée par le coupleur de poussée (38) à la gaine de soufflante (43) par le capot de soufflante (58), le capot de noyau (56) et les adaptateurs de répartition de charge (50) à la gaine de turbine.

2. Un moteur à turbine à gaz à double flux selon la revendication 1, caractérisé en ce que chaque adaptateur de répartition de charge (50) comprend un organe en forme de bloc (90) supporté entre une paire de rails de gaine de turbine (72, 74), un gousset (70) se prolongeant radialement à partir de cet organe en forme de bloc (90), un organe en forme de calotte sphérique (86), maintenue dans un alésage ménagé dans le dit gousset (70) et le dit coupleur (68) reliant le dit organe en forme de calotte sphérique et les dits moyens que l'on peut déconnecter (76).

FIG.1

FIG. 2

0 132 214

FIG.3

FIG. 4